# EUROPEAN PATENT SPECIFICATION

(11) **EP 3 666 626 B1**
(45) Date of publication and mention of the grant of the patent: **25.06.2025**
(21) Application number: 18844484.8
(22) Date of filing: 10.08.2018
(51) Int. Cl.: B62D 7/18, B29C 70/06

(54) **VEHICLE KNUCKLE AND METHOD FOR MANUFACTURING SAME**
FAHRZEUGGELENK UND VERFAHREN ZUR HERSTELLUNG DAVON
ARTICULATION DE VÉHICULE ET SON PROCÉDÉ DE FABRICATION

(30) Priority: 11.08.2017 KR 20170102501
(43) Date of publication of application: 17.06.2020
(73) Proprietor: Iljin Co., Ltd., Gyeongju-si, Gyeongsangbuk-do 38073 (KR)
(72) Inventor: KWON, Ig Jin, Gyeongju-si Gyeongsangbuk-do 38073 (KR); JEONG, Se Woong, Gyeongju-si Gyeongsangbuk-do 38073 (KR); KWON, Hyuk, Gyeongju-si Gyeongsangbuk-do 38073 (KR)
(74) Representative: RGTH
(86) International application number: PCT/KR2018/009171
(87) International publication number: WO 2019/031914

(56) References cited:
- WO-A1-2014/192081
- WO-A1-2017/042573
- JP-A- 2016 075 333
- KR-A- 20130 022 152
- KR-A- 20150 065 222
- KR-A- 20150 103 645
- KR-B1- 101 549 916
- KR-B1- 101 549 916
- US-A1- 2017 210 418
- US-B2- 9 663 144

## Description

### [Technical Field]

The present disclosure relates to a vehicle knuckle and a manufacturing method thereof.

The present disclosure has been derived from a study conducted as part of Industrial Technology Innovation Project of Korea Evaluation Institute of Industrial Technology of the Ministry of Trade, Industry and Energy [Project Number: 10076991, Project Name: Development of CFRP Knuckle using Discontinuous Carbon Fiber and Hot Press Process].

### [Background Art]

Recently, as environmental pollution due to exhaust gas emission becomes serious, various efforts have been made in weight reduction of vehicle parts to achieve improvement in fuel efficiency and reduction in exhaust gas emission.

For example, a knuckle constituting a steering device of a vehicle has been conventionally manufactured using steel material, such as chromium-molybdenum alloy steel, or aluminum material. However, metal material has a problem of a heavy weight.

Accordingly, in response to the weight reduction trend of vehicles, it is required to manufacture a knuckle using lightweight material instead of metal material.

KR 10 1 549 916 B1 and KR 2015 0 103 645 A each show a vehicle knuckle including a knuckle body made of carbon fiber reinforced plastics (CFRP) and having an assembly hole; and a wheel bearing bushing inserted and joined into the assembly hole of the knuckle body to allow a wheel bearing to be mounted. The wheel bearing bushing includes: a first bushing made of CFRP; a second bushing made of CFRP to be engaged with and joined to the outer circumference of the first bushing; and a third bushing to be engaged with and joined to the inner circumference of the first bushing.

US 2017/0210418 A1 shows an overall knuckle comprising a laminated body which is formed by laminating a plurality of random mats, and interposing a uni directional sheet between the random mats.

### [Disclosure]

### [Technical Problem]

In response to the weight reduction trend of vehicles, the present disclosure is directed to providing a practically applicable vehicle knuckle comprising a knuckle body which is manufactured using carbon chips, wherein the carbon chip is a new material, which is lighter than metal material and is capable of having the substantially same mechanical properties as metal material.

In particular, the present disclosure is directed to providing a vehicle knuckle in which strength of a portion of a knuckle body for installing or connecting other parts is reinforced with a bushing.

Further, the present disclosure is directed to providing a vehicle knuckle in which a bushing coupled to a knuckle body is firmly coupled without being separated.

### [Technical Solution]

The problem is solved by a vehicle knuckle according to claim 1 as well as by a manufacturing method according to claim 8.

The vehicle knuckle according to the present disclosure comprises a bushing formed of metal material; and a knuckle body formed of carbon fiber reinforcement plastic material and having at least one bushing hole to which a ball joint is couplable, wherein at least a portion of the bushing may be coupled to the bushing hole of the knuckle body through press-fit.

The knuckle body is formed by hot-press forming carbon chip material comprising carbon fiber reinforcement plastic material.

In one embodiment, the bushing may be made of steel or aluminum material.

In one embodiment, the bushing may comprise a cylinder portion, and at least one groove may be formed on an outer circumferential surface of the cylinder portion in a circumferential direction.

In one embodiment, at least one groove may be formed on an inner circumferential surface of the bushing hole of the knuckle body in a circumferential direction.

In one embodiment, an inner diameter of the bushing hole may be smaller than an outer diameter of the remaining portion of the cylinder portion of the bushing except for the groove, and a difference between the inner diameter of the bushing hole and the outer diameter of the remaining portion of the cylinder portion of the bushing except for the groove may be 0.01 to 0.15 mm.

In one embodiment, an inner diameter of the bushing hole except for the groove may be smaller than an outer diameter of the cylinder portion of the bushing, and a difference between the inner diameter of the bushing hole except for the groove and the outer diameter of the cylinder portion of the bushing may be 0.01 to 0.15 mm.

In one embodiment, the bushing may further comprise a flange portion formed to extend from one end portion of the cylinder portion in a radially outward direction.

In one embodiment, a width of the groove formed in the busing may be greater than or equal to 8 mm and may be less than or equal to 1/3 of an entire length of the bushing.

In one embodiment, a bonding agent may be provided at least in the groove between the knuckle body and the bushing.

In one embodiment, the bonding agent may be an epoxy resin.

The axial length of the bushing except for the flange portion is smaller than an axial length of the bushing hole in a cross-section taken along an axial direction of the bushing.

The manufacturing method of a vehicle knuckle according to another aspect of the present disclosure comprises preparing a bushing formed of metal material; preparing a knuckle body formed of carbon fiber reinforcement plastic material and having at least one bushing hole; applying a bonding agent on an outer circumferential surface of the bushing; and coupling at least a portion of the bushing to the bushing hole of the knuckle body through press-fit, wherein an inner diameter of the bushing hole may be smaller than an outer diameter of the bushing.

The manufacturing method further comprises forming a through-hole in the bushing.

The preparing of the knuckle body comprises forming the knuckle body by hot-press forming carbon chip material comprising carbon fiber reinforcement plastic material.

In one embodiment, the preparing of the bushing may comprise manufacturing the bushing by machining steel or aluminum material.

In one embodiment, in the preparing of the knuckle body and the preparing of the bushing, the knuckle body and the bushing may be manufactured such that a difference between an inner diameter of the bushing hole and an outer diameter of the bushing is 0.01 to 0.15 mm.

In one embodiment, in the preparing of the bushing, at least one groove may be formed on an outer circumferential surface of the bushing in a circumferential direction.

In one embodiment, the preparing of the knuckle body may comprise filling a mold with carbon chip material; hot-press forming the carbon chip material filled in the mold; and separating a formed knuckle from the mold.

In one embodiment, the preparing of the bushing may comprise forming a recess at one end surface of the bushing, and the coupling of at least a portion of the bushing to the bushing hole of the knuckle body may comprise inserting a portion of a press device into the recess and aligning the bushing and the bushing hole of the knuckle body in an axial direction.

### [Advantageous Effects]

In accordance with a vehicle knuckle and a manufacturing method thereof according to various embodiments of the present disclosure, a lightweight knuckle manufactured using carbon chips can be practically provided.

Further, since a bushing for installing or connecting other parts is firmly coupled to a knuckle body, it is possible to stably install or connect the other parts to the knuckle body and to prevent a problem that the bushing is separated together with the other parts when the other parts are replaced.

### [Description of Drawings]

The following drawings, which are incorporated herein, illustrate embodiments of the present disclosure and serve to provide a further understanding of the present disclosure together with the detailed descriptions of the present disclosure. Accordingly, it should be construed that the present disclosure is not limited to embodiments illustrated in the drawings.
FIG. 1 is a perspective view illustrating a knuckle according to one embodiment of the present disclosure.
FIG. 2 is a perspective view illustrating the knuckle according to one embodiment of the present disclosure when viewed from another direction.
FIG. 3 is a cross-sectional view illustrating only a portion of a knuckle body in a cross-section taken along line II-II shown in FIG. 1.
FIG. 4 is a cross-sectional view illustrating only a bushing body in a cross-section taken along line II-II shown in FIG. 1.
FIG. 5 is a cross-sectional view illustrating a state in which the bushing is coupled to a portion of the knuckle body according to one embodiment of the present disclosure.
FIG. 6 is a cross-sectional view illustrating a state in which a bushing is coupled to a portion of a knuckle body according to another embodiment of the present disclosure.
FIG. 7 is a cross-sectional view illustrating a groove formed in the bushing according to another embodiment of the present disclosure.
FIG. 8 is a cross-sectional view illustrating a state in which a ball stud is coupled to the knuckle and the bushing according to one embodiment of the present disclosure when viewed from a cross-section taken along an axial direction of the bushing.
FIG. 9 is a flowchart illustrating a manufacturing method of a knuckle according to one embodiment of the present disclosure.

### [Modes of the Invention]

Embodiments of the present disclosure are exemplified for the purpose of describing aspects of the present disclosure. The scope of the claims according to the present disclosure is not limited to the embodiments described below or to the detailed descriptions of these embodiments.

Unless otherwise defined, all technical and scientific terms used herein have the same meaning commonly understood by those skilled in the art to which the present disclosure pertains. All terms used herein are selected for the purpose of more clearly describing the present disclosure and not limiting the scope of the present disclosure defined by appended claims.

Unless the phrase or sentence clearly indicates otherwise, terms "comprising," "including," " having," "taking," and the like used herein should be construed as openended terms encompassing the possibility of including other embodiments.

The singular form described herein may include the plural form unless the context clearly dictates otherwise, and this is equally applied to the singular form set forth in the claims.

Hereinafter, embodiments of the present disclosure will be described with reference to the accompanying drawings. In the accompanying drawings, same reference numerals are assigned to same or corresponding components. Further, in the following descriptions of the embodiments, duplicate descriptions of same or corresponding components may be omitted. However, even though descriptions on a component are omitted, such a component is not intended to be excluded in any embodiment.

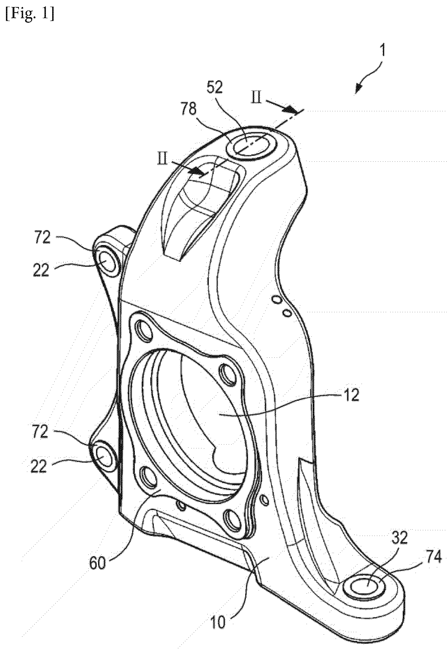

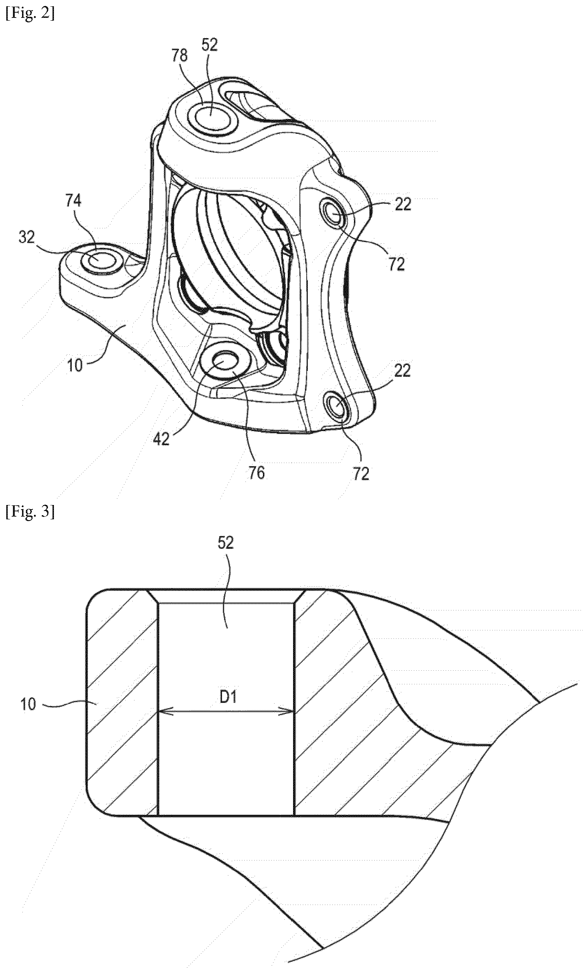

FIGS. 1 and 2 illustrate a vehicle knuckle 1 according to one embodiment of the present disclosure. As shown in FIGS. 1 and 2, the vehicle knuckle 1 according to one embodiment of the present disclosure comprises a knuckle body 10 and bushings 60, 72, 74, 76 and 78 coupled to the knuckle body 10.

In order for weight reduction of the knuckle 1, the knuckle body 10 may be manufactured using carbon chips.

The carbon chip is a chip-shaped material obtained by dividing carbon fiber reinforcement plastic film material into a predetermined size (e.g., a length ranging from 10 to 150 mm and a width ranging from 3 to 20 mm) so as to have mechanical strength and excellent productivity required for vehicle parts. The knuckle body 10 may be manufactured by filling a mold with the above-described carbon chips and then hot-press forming the carbon chips under high temperature and high pressure environment.

When manufacturing a knuckle using conventional carbon fiber reinforcement plastic films (continuous fiber), the carbon fiber reinforcement plastic films are cut according to a shape of the knuckle, the cut carbon fiber reinforcement plastic films are stacked according to orientation of fiber texture, and then the carbon fiber reinforcement plastic films are hot-press formed. However, such a manufacturing method has a problem that the productivity of the knuckle is degraded since the manufacturing processes of cutting and stacking the carbon fiber reinforcement plastic films are complicated and strength of the manufactured knuckle is degraded in a specific direction (e.g., a direction perpendicular to a stacking direction) due to the directional property of the fiber texture of the carbon fiber reinforcement plastic film.

On the contrast, when manufacturing a knuckle body using the carbon chips according to the present disclosure, the knuckle body may be manufactured to have light weight as compared with a conventional vehicle knuckle formed of metal material, while securing mechanical strength required to vehicle parts. Further, unlike a conventional case in which a knuckle is formed of carbon fiber reinforcement plastic films (continuous fiber), it is possible in the knuckle according to the present disclosure to remarkably enhance productivity since the knuckle body can be formed through only a simplified process of pouring the carbon chips of a required weight into a mold without cumbersome processes of cutting the carbon fiber reinforcement plastic films and stacking the cut carbon fiber reinforcement plastic films according to orientation of the fiber texture. In addition, the knuckle according to the present disclosure can solve a problem that strength is degraded in a specific direction due to the stacking of the films.

A hub bushing hole 12 may be formed to pass through a central portion of the knuckle body 10, and a hub bushing 60 may be provided in the hub bushing hole 12 to support a wheel bearing device. A caliper bushing 72 may be coupled to the bushing hole 22, and thus the knuckle 1 may be connected to a brake caliper. According to one embodiment of the present disclosure, when the knuckle body 10 is formed of carbon chips, the knuckle body 10 to which the bushings 60 and 72 are integrally coupled may be formed by hot-press forming the carbon chips in a state that the hub bushing 60 and the caliper bushing 72 are located in a mold.

The knuckle body 10 may further comprise at least one bushing hole 32, 42 or 52. FIGS. 1 and 2 illustrate the knuckle 1 at a state in which the bushings 74, 76 and 78 are coupled to the knuckle body 10. In FIGS. 1 and 2, reference numerals 32, 42 and 52 for bushing holes indicate positions of the bushing holes 32, 42 and 52 formed according to one embodiment. The bushing holes 32, 42 and 52 may be formed as cylindrical paths passing through the knuckle body 10.

The bushings 74, 76 and 78 may be coupled to the bushing holes 32, 42 and 52 of the knuckle body 10, and the knuckle body 10 may install or connect other parts through the bushings 74, 76 and 78. The bushing 74 may be coupled to the bushing hole 32 such that the knuckle 1 may be connected to a tie rod. The bushing 76 may be coupled to the bushing hole 42 such that the knuckle 1 may be connected to a lower control arm constituting a suspension. The bushing 78 may be coupled to the bushing hole 52 such that the knuckle may be connected to an upper control arm constituting the suspension.

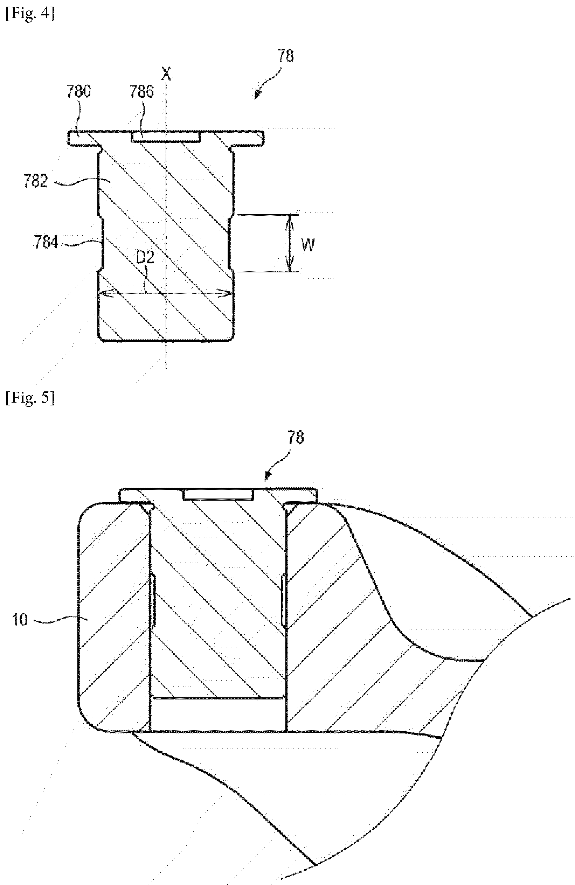

FIG. 3 is a cross-sectional view illustrating only a portion of the knuckle body 10 in a cross-section taken along line II-II shown in FIG. 1, and FIG. 4 is a cross-sectional view illustrating only the bushing 78 in a cross-section taken along line II-II shown in FIG. 1. Hereinafter, the descriptions will be made based on the bushing hole 52 and the bushing 78, but the same may be also applied to the other bushings 74 and 76 and the other bushing holes 32 and 42.

The bushing 78 may be made of aluminum or steel material having strength that is larger than that of the knuckle body 10. In the knuckle body 10 made of carbon chip material, portions at which other parts are installed or connected have a relatively high risk of abrasion or damage. In the knuckle body 10 according to one embodiment of the present disclosure, strength of the portions at which other parts are installed or connected is complemented with aluminum or steel material having strength that is larger than that of the carbon chip material, and thus it is possible to provide an effect which is capable of stably installing or connecting the other parts and increasing durability of the knuckle.

For example, FIG. 4 illustrates the bushing 78 according to one embodiment of the present disclosure. With reference to FIG. 4, the bushing 78 may comprise a cylinder portion 782 and a flange portion 780 formed to extend from one end portion of the cylinder portion 782 in a radially outward direction. The cylinder portion 782 may be inserted into the bushing hole 52 of the knuckle body 10, and the flange portion 780 may be coupled over a circumferentially outer side of the bushing hole 52 when the bushing hole 52 is viewed from above.

A circular recess 786 may be further provided at a central portion of one end surface of the bushing 78. When the bushing 78 is inserted into the bushing hole 52, a portion of a press device is inserted into the recess 786 formed at the one end surface of the bushing 78 so that the bushing 78 and the bushing hole 52 may be aligned in an axial direction. In this state, the bushing 78 may be easily engaged into the bushing hole 52 by pressing the bushing 78 toward the bushing hole 52 through the press device.

For convenience of illustration (e.g., for illustrating the recess 786), the bushing 78 according to one embodiment is illustrated in a state that a through-hole is not formed in FIGS. 1, 2 and 4 to 6. That is, as described below, after the bushing 78 is coupled to the knuckle body 10, the through-hole is additionally formed in an axial direction of the bushing 78 so that the cylinder portion 782 may be formed in the form of a hollow cylinder to which a ball joint may be coupled.

The inventors of the present disclosure found a problem that if the bushing is coupled to the knuckle body by only a bonding agent, the bushing (especially, the bushing to which a ball joint is coupled) is separated from the knuckle body when a part connected to the knuckle body are replaced, since a large external force (e.g., 2 tons) is applied for replacement of the part connected to the knuckle body. That is, when a large external force acts on the bushing, a layer formed by the bonding agent may be deformed or broken and the bushing may be separated.

Accordingly, the inventors of the present disclosure have derived a new coupling method of the knuckle body and the busing which is capable of preventing the bushing 78 from being separated even when an external force is applied to the bushing 78 for replacement of the part connected to the knuckle body 10.

According to one embodiment of the present disclosure, at least a portion of the bushing 78 may be coupled to the knuckle body 10 through press-fit. FIG. 5 illustrates a state in which the bushing 78 is coupled to the bushing hole 52 of the knuckle body 10 according to one embodiment of the present disclosure.

The carbon fiber reinforcement plastic material has a problem of not being flexibly deformed due to a lack of elasticity. However, the inventors of the present disclosure have made the bushing to be press-fitted into the bushing hole of the knuckle body by optimizing dimensions related to an inner diameter of the bushing hole of the knuckle and an outer diameter of the bushing and forming a groove for the bonding agent on an outer circumferential surface of the bushing. Since stress acting on the knuckle during the press-fit process may be partially alleviated in the groove for the bonding agent, it is possible to prevent the knuckle from being broken. Further, even when an external force for replacement of the part connected to the knuckle body 10 is applied, the bushing 78 can be reliably prevented from being separated from the knuckle body 10 since both of a bonding force due to the bonding agent and a press-fitting force due to the press-fit are provided.

A configuration for simultaneously applying the bonding force due to the bonding agent and the press-fitting force due to the press-fit will be described in detail below.

A size of the bushing hole and a size of the bushing may be limited according to other requirements of the vehicle and should provide sufficient resistance to the external force in the limited sizes. For example, at least one groove 784 may be formed on an outer circumferential surface of the cylinder portion 782 of the bushing 78 and a bonding agent (not shown) may be provided in the groove 784 so that the bonding force due to the bonding agent may be provided between the knuckle body 10 and the bushing 78. The groove 784 may be provided as a single groove instead of a plurality of grooves. In this case, a width of the groove 784 may be increased in the bushing hole 52 having a limited height (as compared with a case of forming a plurality of grooves) so that a degree of breakage of the bonding agent may be reduced and large adhesion may be maintained.

According to one embodiment, a width W (*see* FIG. 4) of the groove 784 may be greater than or equal to 8 mm. Further, in order to provide an acting force due to the press-fit in addition to an acting force due to the bonding agent, the width W of the groove 784 may not exceed 1/3 of an entire length of the bushing 78. When the width of the groove 784 exceeds 1/3 of the entire length of the bushing 78, a press-fitting force between the bushing 78 and the knuckle body 10 becomes insufficient so that a press-fitting force due to a load of, for example, at most 2 tons, may not be supported.

According to one embodiment, it is preferable that an inner diameter D1 (*see* FIG. 3) of the bushing hole 52 is smaller than an outer diameter D2 (*see* FIG. 4) of the remaining portion of the cylinder portion 782 of the bushing 78 except for the groove 784 and a difference between the inner diameter D1 of the bushing hole 52 and the outer diameter D2 of the remaining portion of the cylinder portion 782 of the bushing 78 except for the groove 784 is 0.01 to 0.15 mm. When the difference between the inner diameter D1 and the outer diameter D2 is smaller than 0.01mm, the press-fitting force due to the press-fit is insufficient and the bushing 78 may be separated when an external force is applied. Further, when the difference between the inner diameter D1 and the outer diameter D2 is larger than 0.15 mm, breakage may occur in carbon fibers of the carbon chip constituting the knuckle body 10 when the bushing 78 is press-fitted to the knuckle body 10, and thus strength of the knuckle 1 may be degraded or the knuckle 1 may be broken.

Table 1 shows a press-fitting load and a minimum separation load which are measured according to the difference between the inner diameter D1 of the bushing hole 52 and the outer diameter D2 of the remaining portion of the cylinder portion 782 of the bushing 78 except for the groove 784 (the difference may be defined as a press-fitted amount in Table 1). The press-fitting load is a range of a load applied until the bushing 78 is fully press-fitted into the knuckle body 10, and the minimum separation load is a minimum load applied for separating the bushing 78 press-fitted into the knuckle body 10.

According to the measurement result, when the press-fitted amount is smaller than 0.01 mm, a load ranging from 0 to 0.1 ton was applied until the bushing 78 is fully press-fitted into the knuckle body 10, and a minimum separation load for separating the coupled bushing 78 from the knuckle body 10 was measured as 0.1 ton. In a case that the press-fitted amount is less than 0.01 mm, when an external force (approximately 2 tons) is applied to replace the part connected to the knuckle body 10, the bushing 78 is separated together with the part to be replaced. In the meantime, when the press-fitted amount exceeds 0.15 mm, the knuckle 1 was broken and a crack was generated while the bushing 78 is press-fitted into the knuckle body 10.

On the other hand, when the press-fitted amount is 0.01 to 0.15 mm, a load ranging from 0 to 10 ton was applied until the bushing 78 is fully press-fitted into the knuckle body 10, and a minimum separation load for separating the coupled bushing 78 from the knuckle body 10 was measured as 15 tons. That is, when the press-fitted amount according to one embodiment of the present disclosure is applied, a load of at least 15 tons is required to separate the bushing 78 from the knuckle body 10. Accordingly, even when an external force (approximately 2 tons) is applied for replacement of the part connected to the knuckle body 10, the bushing 78 may be reliably prevented from being separated from the knuckle body 10.

**[Table 1]**

| Press-fitted amount | Press-fitting load (ton) | Minimum separation load (ton) |
|---|---|---|
| Less than 0.01 mm | Exceeding 0 to 0.1 | 0.1 |
| 0.01 to 0.15mm | Exceeding 0 to 10 | 15 |
| Exceeding 0.15 mm | When the bushing is press-fitted into the knuckle body, the knuckle was broken and a crack is generated | |

In the present disclosure, the dimensions of the bushing 78 and the bushing hole 52 refer to dimensions before being deformed by the press-fit, that is, before the bushing 78 is press-fitted to the bushing hole 52 of the knuckle body 10.

According to one embodiment, the bushing 78 may be press-fitted to the knuckle body 10 in a state that a bonding agent is applied to the outer circumferential surface of the cylinder portion 782 of the bushing 78. Accordingly, the bonding agent may be further provided between the bushing hole 52 of the knuckle body 10 and the bushing 78, particularly at least in the groove 784.

According to one embodiment, the bonding agent may be an epoxy resin. Since the epoxy resin may provide large adhesion to a surface of material while being cured, the epoxy resin may further increase the coupling force in addition to the press-fitting force due to the press-fit of the knuckle body 10 and the bushing 78.

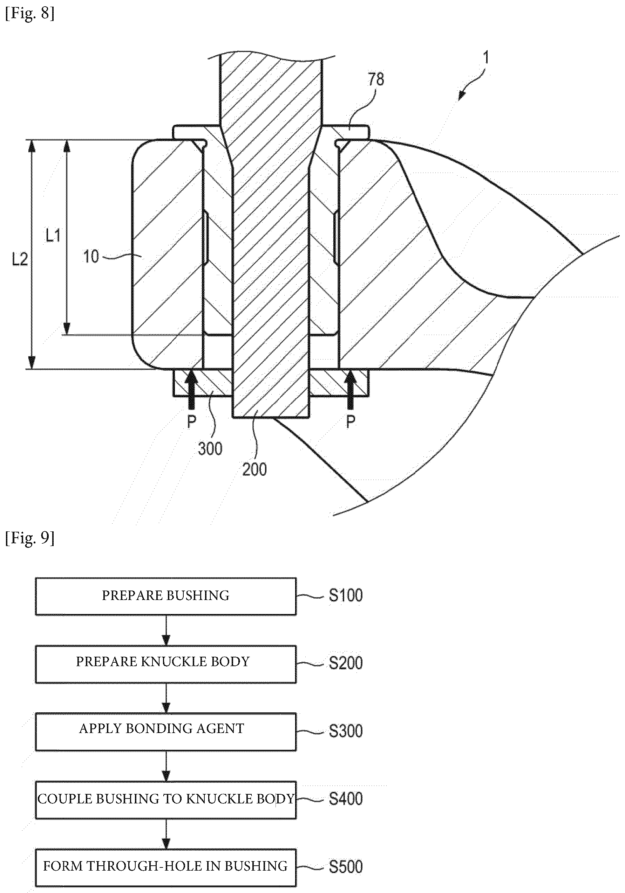

As described above, after the bushing 78 is coupled to the knuckle body 10, the through-hole may be formed in the axial direction of the bushing 78 and a ball joint may be coupled to the through-hole. For example, FIG. 8 is a cross-sectional view illustrating a state in which a ball stud 200 of the ball joint is coupled to the knuckle body 10 and the bushing 78 according to one embodiment of the present disclosure when viewed from a cross-section taken along the axial direction of the bushing.

As shown in FIG. 8, the ball stud 200 is additionally fixed to the knuckle 1 in the axial direction by engaging a ball stud assembly nut 300 to the ball stud 200 from one side of the knuckle body 10. In a cross-sectional view taken along the axial direction of the bushing 78, an axial length L1 of the bushing 78 except for the flange portion 780 may be smaller than an axial length L2 of the bushing hole 52. Accordingly, the ball stud assembly nut 300 is not in contact with the bushing 78 and is in contact with only the knuckle body 10 so that a load transmitted from the ball stud 200 is transmitted to only the knuckle body 10 in a direction of an arrow P and is not transmitted to the bushing 78. That is, an influence of the load transmitted by the ball stud 200 at the coupling portion between the bushing 78 and knuckle body 10 may be significantly reduced, and a risk in that the bushing 78 is separated from the knuckle body 10 may be further reduced.

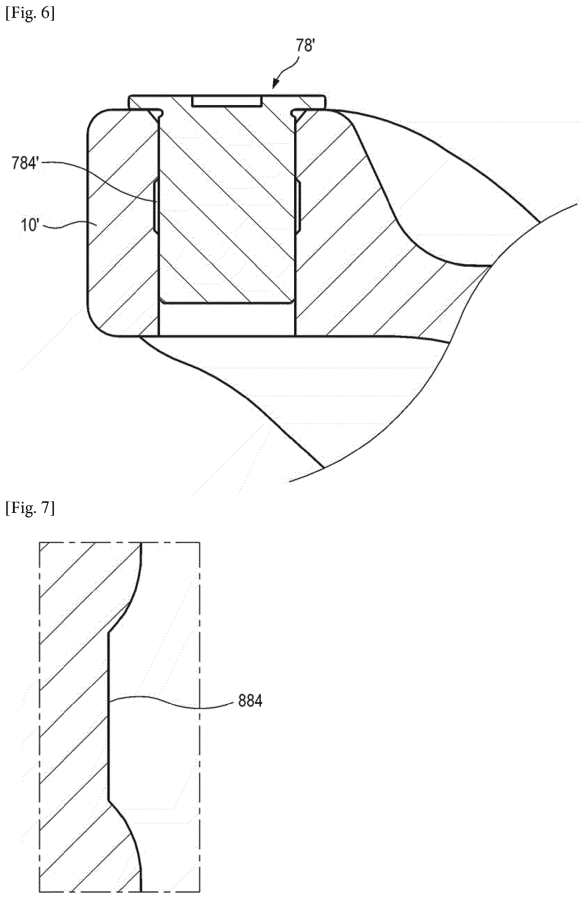

Alternatively, a groove 784' for a bonding agent may be formed on an inner circumferential surface of a bushing hole of a knuckle body 10' into which a bushing 78' is inserted instead of an outer circumferential surface of a cylinder portion of the bushing 78'. FIG. 6 is a cross-sectional view illustrating a state in which the bushing 78' is coupled to a portion of the knuckle body 10' according to another embodiment. As a result, similar to the case of forming the groove 784 on the bushing 78, it is possible to obtain an effect of alleviating stress acting on the knuckle body 10' during the press-fit and improving the coupling force between the bushing 78' and the knuckle body 10' due to the bonding agent.

In the above-described embodiments, shapes of the grooves 784 and 784' for the bonding agent may be replaced with a groove 884 having a smooth curved shape at both ends in the width direction, at which the knuckle body is in contact with the bushing, as shown in FIG. 7. Consequently, it is possible to solve a stress concentration problem of the knuckle caused by edges of the grooves 784 and 784' when the bushing 78 and 78' are inserted into the bushing holes of the knuckle bodies 10 and 10'.

FIG. 9 is a flowchart illustrating a manufacturing method of a vehicle knuckle according to one embodiment of the present disclosure. With reference to FIG. 9, the manufacturing method of a vehicle knuckle according to one embodiment may comprise preparing a bushing 78 formed of metal material (S100); preparing a knuckle body 10 formed of carbon fiber reinforcement plastic material and having at least one bushing hole 52 formed on the knuckle body 10 (S200); applying a bonding agent onto an outer circumferential surface of the bushing 78 (S300); coupling the bushing 78 to the bushing hole 52 of the knuckle body 10 through press-fit (S400); and forming a through-hole in the bushing 78 (S500).

In the preparing of the bushing 78 (S100), the bushing 78 may be formed by machining steel or aluminum material.

The preparing of the knuckle body 10 (S200) may comprise material filling operation of filling a mold with carbon chip material as much as a weight required for a knuckle forming; a hot-press forming operation of hot-press forming the carbon chip material filled in the mold; and a separation and trimming operation of separating the formed knuckle from the mold and trimming to remove surplus material attached to an outside of the formed knuckle.

Unlike a conventional case in which a knuckle is formed of carbon fiber reinforcement plastic films (continuous fiber), when the knuckle body 10 is formed of the carbon chips according to the present disclosure, productivity of the knuckle can be remarkably improved, since the knuckle body can be formed through only a simplified process of pouring the carbon chips of a required weight into the mold without cumbersome processes of cutting the carbon fiber reinforcement plastic films according to a shape of the knuckle and stacking the cut carbon fiber reinforcement plastic films according to orientation of the fiber texture.

In the preparation of the bushing 78, the bushing 78 may be formed to comprise the cylinder portion 782 and the flange portion 780 formed to extend from one end portion of the cylinder portion 782 in a radially outward direction.

The preparing of the knuckle body 10 (S200) may further comprise forming at least one bushing hole 52 in the knuckle body 10. The inner diameter D1 of the bushing hole 52 may be formed to be smaller than the outer diameter D2 of the remaining portion of the cylinder portion 782 of the bushing 78 except for the groove 784, and a difference between the inner diameter D1 of the bushing hole 52 and the outer diameter D2 of the remaining portion of the cylinder portion 782 of the bushing 78 except for the groove 784 may be formed to range from 0.01 to 0.15 mm.

When the bushing hole 52 and the bushing 78 are formed as described above and then the bushing 78 is press-fitted into the bushing hole 52, a sufficient press-fitting force may be obtained between the knuckle body 10 and the bushing 78 without deformation of the carbon fibers in the carbon chips of the knuckle body 10.

The preparing of the bushing 78 (S100) may further comprise forming at least one groove 784 on an outer circumferential surface of the cylinder portion 782 in a circumferential direction. The groove 784 may be formed to have a width greater than or equal to 8 mm and less than or equal to 1/3 of the entire length of the bushing 78.

The coupling of the bushing 78 to the bushing hole 52 of the knuckle body 10 through press-fit (S400) may further comprise inserting a portion of a press device into the recess 786 and aligning the bushing 78 and the bushing hole 52 of the knuckle body 10 in the axial direction. In this state, the bushing 78 may be easily coupled to the bushing hole 52 by pressing the bushing 78 toward the bushing hole 52 using the press device.

Before the coupling of the bushing 78 to the bushing hole 52 of the knuckle body 10 through press-fit (S400), the applying of the bonding agent onto the outer circumferential surface of the cylinder portion782 of the bushing 78 (S300) may be further provided. As the sufficient bonding agent is provided on the outer circumferential surface of the bushing 78, particularly in the groove 784, the bonding agent may increase the coupling force between the knuckle body 10 and the bushing 78 while the bonding agent provided between the bushing 78 and the knuckle body 10 is cured during the press-fit.

After the knuckle body 10 and the bushing 78 are completely coupled, the formation of a through-hole (not shown) in the bushing 78 (S500) may be further provided. The through hole is a feature for assembling the ball joint which connects another vehicle part to the knuckle 1 and may be formed so as to pass through in an axial direction X of the bushing 78.

Alternatively, the preparing of the knuckle body 10' (S200) may further comprise forming the groove 784' for the bonding agent on the inner circumferential surface of the bushing hole 52.

The manufacturing method of a vehicle knuckle according to one embodiment of the present disclosure and the vehicle knuckle manufactured according to such a manufacturing method may provide the following advantages.

Since the vehicle knuckle is formed by hot-press forming the carbon chips, the knuckle may be manufactured in a considerably light weight as compared with a conventional metal knuckle product. Further, unlike a conventional case in which a knuckle is formed of carbon fiber reinforcement plastic films (continuous fiber), a forming preparation may be completed through only a simplified process of pouring the carbon chips of a required weight into a mold without cumbersome processes of cutting the carbon fiber reinforcement plastic films according to a shape of the knuckle and stacking the cut carbon fiber reinforcement plastic films according to orientation of the fiber texture. Therefore, productivity can be significantly improved and mass production can be implemented.

Further, it is possible to supplement a lack of strength of the knuckle body by coupling the bushing made of metal material to portions for installing or connecting other parts to the knuckle body, to stably install or connect the other parts to the knuckle body by firmly coupling the bushing to the knuckle body, and to prevent the bushing from being separated even when the other parts are replaced.
Although embodiments have been described with reference to the accompanying drawings, various alternations and modifications can be derived by those skilled in the art from the above descriptions of the present disclosure.

## Claims

1. A vehicle knuckle, comprising:
a bushing formed of metal material; and
a knuckle body formed of carbon fiber reinforcement plastic material and having at least one bushing hole to which a ball joint is couplable,
wherein at least a portion of the bushing is coupled to the bushing hole of the knuckle body through press-fit,
wherein an axial length of the bushing except for a flange portion is smaller than an axial length of the bushing hole in a cross-section taken along an axial direction of the bushing, and
wherein the knuckle body is manufactured by filling a mold with carbon chip material comprising carbon fiber reinforcement plastic material and then hot-press forming the carbon chip material filled in the mold under high temperature and high pressure environment.

2. The vehicle knuckle of claim 1, wherein
the bushing is made of steel or aluminum material.

3. The vehicle knuckle of claim 2, wherein
the bushing comprises a cylinder portion,
at least one groove is formed on an outer circumferential surface of the cylinder portion in a circumferential direction or is formed on an inner circumferential surface of the bushing hole of the knuckle body in a circumferential direction.

4. The vehicle knuckle of claim 3, wherein:
an inner diameter of the bushing hole is smaller than an outer diameter of the cylinder portion of the bushing except for the groove, and
a difference between the inner diameter of the bushing hole and the outer diameter of the remaining portion of the cylinder portion of the bushing except for the groove is 0.01 to 0.15 mm.

5. The vehicle knuckle of claim 4, wherein a width of the groove is greater than or equal to 8 mm and is less than or equal to 1/3 of an entire length of the bushing.

6. The vehicle knuckle of claim 5, wherein a bonding agent is provided at least in the groove between the knuckle body and the bushing.

7. The vehicle knuckle of claim 6, wherein the bonding agent is an epoxy resin.

8. A manufacturing method of a vehicle knuckle, comprising:
preparing a bushing formed of metal material;
preparing a knuckle body formed of carbon fiber reinforcement plastic material and having at least one bushing hole;
applying a bonding agent on an outer circumferential surface of the bushing; and
coupling at least a portion of the bushing to the bushing hole of the knuckle body through press-fit,
wherein an inner diameter of the bushing hole is smaller than an outer diameter of the bushing,
wherein an axial length of the bushing except for a flange portion is smaller than an axial length of the bushing hole in a cross-section taken along an axial direction of the bushing, and
wherein the preparing of the knuckle body comprises filling a mold with carbon chip material comprising carbon fiber reinforcement plastic material; and hot-press forming the carbon chip material filled in the mold under high temperature and high pressure environment.

9. The manufacturing method of claim 8, further comprising:
forming a through-hole in the bushing.

10. The manufacturing method of claim 8, wherein
the preparing of the bushing comprises manufacturing the bushing by machining steel or aluminum material.

11. The manufacturing method of claim 10, wherein a difference between an inner diameter of the bushing hole and an outer diameter of the bushing is 0.01 to 0.15 mm.

12. The manufacturing method of claim 10, wherein the preparing of the bushing comprises forming at least one groove on the outer circumferential surface of the bushing in a circumferential direction.

13. The manufacturing method of claim 11, wherein the preparing of the knuckle body further comprises:
separating a formed knuckle from the mold.

14. The manufacturing method of claim 8, wherein:
the preparing of the bushing comprises forming a recess at one end surface of the bushing, and
the coupling of at least a portion of the bushing to the bushing hole of the knuckle body comprises inserting a portion of a press device into the recess and aligning the bushing and the bushing hole of the knuckle body in an axial direction.

## Patentansprüche

1. Achsschenkel für ein Fahrzeug, umfassend:
eine Buchse aus einem metallischen Material; und
einen Achsschenkelkörper, der aus kohlenstofffaserverstärktem Kunststoffmaterial ausgebildet ist und mindestens ein Buchsenloch aufweist, an das ein Kugelgelenk gekoppelt werden kann,
wobei mindestens ein Bereich der Buchse durch Presspassung mit dem Buchsenloch des Achsschenkelkörpers gekoppelt ist,
wobei eine axiale Länge der Buchse mit Ausnahme eines Flanschbereichs kleiner ist als eine axiale Länge des Buchsenlochs in einem Querschnitt entlang einer axialen Richtung der Buchse, und
wobei der Achsschenkelkörper durch Füllen einer Form mit Kohlenstoffspanmaterial, das kohlenstofffaserverstärktes Kunststoffmaterial umfasst, und anschließendes Heißpressen des in die Form gefüllten Kohlenstoffspanmaterials unter hoher Temperatur und hohem Druck hergestellt wird.

2. Achsschenkel für ein Fahrzeug gemäß Anspruch 1, wobei
die Buchse aus Stahl oder Aluminium besteht.

3. Achsschenkel für ein Fahrzeug gemäß Anspruch 2, wobei
die Buchse einen Zylinderbereich umfasst,
mindestens eine Nut an einer äußeren Umfangsfläche des Zylinderbereichs in einer Umfangsrichtung ausgebildet ist oder an einer inneren Umfangsfläche des Buchsenlochs des Achsschenkelkörpers in einer Umfangsrichtung ausgebildet ist.

4. Achsschenkel für ein Fahrzeug gemäß Anspruch 3, wobei:
ein Innendurchmesser des Buchsenlochs kleiner ist als ein Außendurchmesser des Zylinderbereichs der Buchse mit Ausnahme der Nut, und
ein Unterschied zwischen dem Innendurchmesser des Buchsenlochs und dem Außendurchmesser des restlichen Bereichs des Zylinderbereichs der Buchse mit Ausnahme der Nut 0,01 bis 0,15 mm beträgt.

5. Achsschenkel für ein Fahrzeug gemäß Anspruch 4, wobei eine Breite der Nut größer als oder gleich 8 mm und kleiner als oder gleich 1/3 einer Gesamtlänge der Buchse ist.

6. Achsschenkel für ein Fahrzeug gemäß Anspruch 5, wobei zumindest in der Nut zwischen dem Achsschenkelkörper und der Buchse ein Bindemittel vorgesehen ist.

7. Achsschenkel für ein Fahrzeug gemäß Anspruch 6, wobei das Bindemittel ein Epoxidharz ist.

8. Herstellungsverfahren eines Achsschenkels für ein Fahrzeug, umfassend:
Vorbereiten einer Buchse, die aus metallischem Material ausgebildet ist;
Herstellen eines Achsschenkelkörpers, der aus kohlenstofffaserverstärktem Kunststoffmaterial ausgebildet ist und mindestens ein Buchsenloch aufweist;
Auftragen eines Bindemittels auf eine äußere Umfangsfläche der Buchse; und
Koppeln mindestens eines Bereichs der Buchse mit dem Buchsenloch des Achsschenkelkörpers durch Presspassung,
wobei ein Innendurchmesser des Buchsenlochs kleiner ist als ein Außendurchmesser der Buchse,
wobei eine axiale Länge der Buchse mit Ausnahme eines Flanschbereichs kleiner ist als eine axiale Länge des Buchsenlochs in einem Querschnitt entlang einer axialen Richtung der Buchse, und
wobei das Herstellen des Achsschenkelkörpers das Füllen einer Form mit Kohlenstoffspanmaterial, das kohlenstofffaserverstärktes Kunststoffmaterial umfasst, und das Heißpressen des in die Form gefüllten Kohlenstoffspanmaterials unter hoher Temperatur und hohem Druck umfasst.

9. Herstellungsverfahren gemäß Anspruch 8, ferner umfassend:
Ausbilden einer Durchgangsbohrung in der Buchse.

10. Herstellungsverfahren gemäß Anspruch 8,
wobei das Herstellen der Buchse ein Fertigen der Buchse durch maschinelle Bearbeitung von Stahl- oder Aluminiummaterial umfasst.

11. Herstellungsverfahren gemäß Anspruch 10, wobei der Unterschied zwischen einem Innendurchmesser des Buchsenlochs und einem Außendurchmesser der Buchse 0,01 bis 0,15 mm beträgt.

12. Herstellungsverfahren gemäß Anspruch 10, wobei das Herstellen der Buchse das Ausbilden mindestens einer Nut auf der äußeren Umfangsfläche der Buchse in einer Umfangsrichtung umfasst.

13. Herstellungsverfahren gemäß Anspruch 11, wobei das Herstellen des Achsschenkelkörpers Folgendes umfasst:
Trennen eines geformten Achsschenkels von der Form.

14. Herstellungsverfahren gemäß Anspruch 8, wobei:
das Herstellen der Buchse das Ausbilden einer Aussparung an einer Endfläche der Buchse umfasst, und
das Koppeln von mindestens einem Bereich der Buchse mit dem Buchsenloch des Achsschenkelkörpers ein Einführen eines Bereichs einer Pressvorrichtung in die Aussparung und ein Ausrichten der Buchse und des Buchsenlochs des Achsschenkelkörpers in einer axialen Richtung umfasst.

## Revendications

1. Une articulation de véhicule, comprenant
une bague formée d'un matériau métallique ; et
un corps de l'articulation formé d'un matériau plastique renforcé de fibres de carbone et comportant au moins un trou de bague auquel une rotule peut être accouplée,
dans lequel au moins une partie de la bague est couplée au trou de la bague du corps de l'articulation par emmanchement,
dans lequel une longueur axiale de la bague, à l'exception d'une partie de la bride, est inférieure à une longueur axiale du trou de la bague dans une section transversale prise le long d'une direction axiale de la bague, et
dans lequel le corps de l'articulation est fabriqué en remplissant un moule avec un matériau à base de copeaux de carbone comprenant un matériau plastique de renforcement des fibres de carbone, puis en formant par pressage à chaud le matériau à base de copeaux de carbone rempli dans le moule dans un environnement à haute température et à haute pression.

2. L'articulation de véhicule de la revendication 1, dans laquelle
la bague est en acier ou en aluminium.

3. L'articulation de véhicule de la revendication 2, dans laquelle
la bague comprend une partie cylindrique,
au moins une rainure est formée sur une surface circonférentielle extérieure de la partie cylindrique dans une direction circonférentielle ou est formée sur une surface circonférentielle intérieure du trou de bague du corps de l'articulation dans une direction circonférentielle.

4. L'articulation de véhicule de la revendication 3, dans laquelle :
le diamètre intérieur du trou de la bague est inférieur au diamètre extérieur de la partie cylindrique de la bague, à l'exception de la rainure, et
une différence entre le diamètre intérieur du trou de la bague et le diamètre extérieur de la partie restante de la partie cylindrique de la bague, à l'exception de la rainure, est comprise entre 0,01 et 0,15 mm.

5. L'articulation de véhicule de la revendication 4, dans laquelle la largeur de la rainure est supérieure ou égale à 8 mm et inférieure ou égale à 1/3 de la longueur totale de la bague.

6. L'articulation de véhicule de la revendication 5, dans laquelle un agent de liaison est fourni au moins dans la rainure entre le corps de l'articulation et la bague.

7. L'articulation de véhicule de la revendication 6, dans laquelle l'agent de liaison est une résine époxy.

8. Méthode de fabrication d'une articulation de véhicule, comprenant :
la préparation d'une bague en métal ;
la préparation d'un corps de l'articulation formé d'un matériau plastique renforcé de fibres de carbone et comportant au moins un trou de bague;
appliquer un agent de liaison sur une surface circonférentielle extérieure de la bague ; et
coupler au moins une partie de la bague au trou de la bague du corps de l'articulation par emmanchement,
dans lequel le diamètre intérieur du trou de la bague est inférieur à un diamètre extérieur de la bague,
dans lequel une longueur axiale de la bague, à l'exception d'une partie de la bride, est inférieure à une longueur axiale du trou de la bague dans une section transversale prise le long d'une direction axiale de la bague, et
dans lequel la préparation du corps de l'articulation comprend le remplissage d'un moule avec un matériau à base de copeaux de carbone comprenant un matériau plastique de renforcement des fibres de carbone ; et le formage par pressage à chaud du matériau à base de copeaux de carbone rempli dans le moule dans un environnement à haute température et à haute pression.

9. La méthode de fabrication de la revendication 8, comprenant en outre :
la formation d'un trou traversant dans la bague.

10. La méthode de fabrication de la revendication 8,
dans lequel la préparation de la bague comprend la fabrication de la bague par usinage de l'acier ou de l'aluminium.

11. Procédé de fabrication de la revendication 10, dans lequel une différence entre un diamètre intérieur du trou de la bague et un diamètre extérieur de la bague est comprise entre 0,01 et 0,15 mm.

12. Procédé de fabrication de la revendication 10, dans lequel la préparation de la bague comprend la formation d'au moins une rainure sur la surface circonférentielle extérieure de la bague dans une direction circonférentielle.

13. Procédé de fabrication de la revendication 11, dans lequel la préparation du corps de l'articulation comprend en outre:
la séparation d'une articulation formée du moule.

14. La méthode de fabrication de la revendication 8, dans laquelle :
la préparation de la bague comprend la formation d'une cavité sur une surface d'extrémité de la bague, et
l'accouplement d'au moins une partie de la bague au trou de bague du corps de l'articulation consiste à insérer une partie d'un dispositif de presse dans le renfoncement et à aligner la bague et le trou de bague du corps de l'articulation dans une direction axiale.
